(19) Europäisches Patentamt
European Patent Office
Office européen des brevets

(11) **EP 2 502 112 B1**

(12) **FASCICULE DE BREVET EUROPEEN**

(45) Date de publication et mention
de la délivrance du brevet:
**18.03.2015 Bulletin 2015/12**

(21) Numéro de dépôt: **10801592.6**

(22) Date de dépôt: **16.11.2010**

(51) Int Cl.:
*G02F 1/1362* (2006.01)      *H01S 3/00* (2006.01)

(86) Numéro de dépôt international:
**PCT/FR2010/000768**

(87) Numéro de publication internationale:
**WO 2011/061418 (26.05.2011 Gazette 2011/21)**

(54) **DISPOSITIF ET PROCEDE DE FACONNAGE D'IMPULSIONS LASER**

LASER IMPULSE FORMENDE VORRICHTUNG UND ENTSPRECHENDES VERFAHREN

LASER PULSES SHAPING SETUP AND CORRESPONDING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.11.2009 FR 0905514**

(43) Date de publication de la demande:
**26.09.2012 Bulletin 2012/39**

(73) Titulaire: **Centre National de la Recherche
Scientifique
75016 Paris (FR)**

(72) Inventeurs:
• **LOURADOUR, Frédéric**
  **F-87120 Eymoutiers (FR)**
• **KERMENE, Vincent**
  **F-87700 Aixe Sur Vienne (FR)**
• **BARTHELEMY, Alain**
  **F-87100 Limoges (FR)**
• **SURAN, Eric**
  **F-87370 Bersac S/Rivalier (FR)**
• **MANSURYAN, Tigran**
  **Eerevan
  106 (AM)**

(74) Mandataire: **Reboussin, Yohann Mickaël Noël et al
Cabinet Orès
36, rue de St Pétersbourg
75008 Paris (FR)**

(56) Documents cités:
**US-A1- 2001 040 723**

• **EMPLIT P ET AL: "PASSIVE AMPLITUDE AND
PHASE PICOSECOND PULSE SHAPING",
OPTICS LETTERS, OSA, OPTICAL SOCIETY OF
AMERICA, WASHINGTON, DC, US, vol. 17, no. 19,
1 octobre 1992 (1992-10-01), pages 1358-1360,
XP000296098, ISSN: 0146-9592**
• **BOCK MARTIN ET AL: "Spectral and temporal
response of liquid-crystal-on-silicon spatial light
modulators", APPLIED PHYSICS LETTERS, AIP,
AMERICAN INSTITUTE OF PHYSICS, MELVILLE,
NY, US LNKD- DOI:10.1063/1.2909115, vol. 92, no.
15, 15 avril 2008 (2008-04-15), pages
151105-151105, XP012106441, ISSN: 0003-6951**
• **FROEHLY C ET AL: "SHAPING AND ANALYSIS
OF PICOSECOND LIGHT PULSES", PROGRESS
IN OPTICS, XX, XX, 1 janvier 1983 (1983-01-01),
pages 65-153, XP009051991, cité dans la
demande**

## Description

L'invention porte sur un dispositif et un procédé pour le façonnage d'impulsions laser. Plus particulièrement, l'invention porte sur un dispositif et un procédé permettant de convertir une impulsion laser en entrée, présentant typiquement une durée comprise entre quelques femtosecondes (1fs=10<sup>-15</sup> s) et quelques picosecondes (1 ps = 10<sup>-12</sup> s), en un train de répliques de ladite impulsion, modulées en amplitude et éventuellement en phase et/ou en polarisation.

L'invention se prête à des nombreuses applications, en particulier scientifiques : étude résolue en temps de processus photochimiques et photophysiques, caractérisation et/ou usinage de matériaux, contrôle cohérent de réactions chimiques, génération de rayonnement terahertz ou x, métrologie, etc.

Les lasers fonctionnant en régime de verrouillage de phase délivrent des impulsions dont la durée peut être aussi courte que 10 fs, voire moins. Ces impulsions présentent généralement une enveloppe temporelle approximativement gaussienne, avec éventuellement une modulation de phase principalement linéaire ou quadratique.

Dans de nombreuses applications, on a besoin d'impulsions plus longues et sous-structurées ; par exemple, on peut souhaiter générer une impulsion complexe de durée picoseconde constituée par un train d'impulsions élémentaires de durée femtoseconde, modulées en amplitude et/ou en phase et/ou en polarisation.

Pour répondre à ce besoin, de nombreuses techniques de façonnage d'impulsions laser ont été développées. Les plus couramment utilisées sont le filtrage dans le plan de Fourier et la modulation temporelle acousto-optique.

La technique du filtrage dans le plan de Fourier est décrite, en particulier, par le document US 5,682,262. Dans un tel dispositif, un premier réseau de diffraction (ou prisme) disperse les différentes composantes spectrales d'un faisceau laser impulsionnel en entrée. Ces composantes spectrales sont focalisées par une lentille cylindrique de manière à former un champ optique bidimensionnel qui est projeté sur un masque programmable d'amplitude et phase. Ce masque permet d'atténuer et déphaser sélectivement chaque composante, de manière à modifier le spectre des impulsions d'entrée d'une manière prédéterminée. Une deuxième lentille cylindrique et un deuxième réseau ou prisme recombinent les composantes spectrales filtrées, pour former un faisceau laser impulsionnel temporellement structuré en sortie.

Ce procédé est très flexible, mais présente un certain nombre d'inconvénients :

- sa mise en oeuvre est complexe ;
- le procédé introduit des aberrations spatio-temporelles ; cela signifie que le profil temporel du faisceau impulsionnel de sortie varie spatialement dans une direction transversale à la direction de propagation ; ces aberrations spatio-temporelles deviennent particulièrement gênantes si le faisceau impulsionnel de sortie est amené à être focalisé fortement (applications à la microscopie non-linéaire, par exemple) ;
- le masque de phase est pixélisé, et comporte nécessairement des zones interstitielles opaques entre les pixels qui diffractent la lumière ; cela se traduit par l'apparition de répliques temporelles des impulsions de sortie ;
- pour obtenir un profil temporel de sortie prédéterminé il faut connaître précisément le spectre de l'impulsion d'entrée, ainsi que sa phase spectrale, et effectuer des calculs relativement complexes ; ou alors avoir recours à des techniques d'optimisation itérative (algorithmes génétiques, notamment) dont la convergence peut être lente, voire aléatoire.

L'article de T. Brixner et G. Gerber « Femtosecond polarization pulse shaping », Optics Letters, Vol. 26, n° 8, pages 557 - 559, 15 avril 2001, décrit une variante de la technique de filtrage dans le plan de Fourier permettant de moduler la polarisation d'une impulsion. La technique se base sur l'utilisation d'un filtre spatial constitué par un modulateur à cristaux liquides nématiques à double couche.

Une autre technique de façonnage connue de l'art antérieur se base sur l'utilisation d'un modulateur acousto-optique. Un tel dispositif est décrit, par exemple, par l'article de P. Tournois: « Acousto-optic programmable dispersive filter for adaptive compensation of group delay time dispersion in laser systems », Opt. Commun. 140, 245-249 (1997), et commercialisé par la société « Fastlite » sous le nom commercial « Dazzler ». Ce dispositif se base sur l'interaction, à l'intérieur d'un cristal biréfringent, d'une impulsion laser et d'une onde acoustique. Son principal inconvénient, lié à l'utilisation d'une onde acoustique, est sa faible cadence de fonctionnement, de quelques kHz au plus, alors que les oscillateurs laser à verrouillage de phase émettent des impulsions à une cadence de plusieurs MHz.

Encore une autre technique de façonnage d'impulsions laser est le façonnage direct spatio-temporel (DST « direct space-to-time shaping »), décrit par l'article de C. Froehly, B. Colombeau et M. Vampouille « Shaping and analysis of picosecond light pulses », dans « Progress in Optics XX », North Holland 1983, pages 112 - 115. Cette technique est particulièrement simple. Elle consiste à diriger un faisceau laser puisé d'entrée sur un réseau de diffraction, de préférence « blazé .» ou « échelette ». Le faisceau diffracté au premier ordre (ou à un ordre supérieur) est filtré spatialement. Il est possible de démontrer qu'après le filtrage spatial chaque impulsion du faisceau d'entrée est convertie en une impulsion composite de sortie, formée par un train d'impulsions élémentaires. Le nombre d'impulsions élémentaires constituant chaque impulsion composite est égal au nombre de traits du réseau qui sont éclairées par le faisceau d'entrée ; la durée totale de l'impulsion composite est égale à 2l/c, où l est la longueur de la projection du réseau sur l'axe de propagation du faisceau d'entrée et c la vitesse de propagation de la lumière.

Une modulation temporelle de l'intensité de chaque impulsion composite, ou train d'impulsions élémentaires, est obtenue en disposant devant le réseau un écran opaque dans lequel a été découpée une ouverture, dont la forme correspond à la modulation temporelle souhaitée. Cet écran permet de régler la longueur de chaque trait du réseau (mesurée perpendiculairement au plan de dispersion), et par conséquent l'énergie de chaque impulsion élémentaire du faisceau de sortie.

Cette technique est très simple à mettre en oeuvre, mais peu flexible : pour chaque profil temporel souhaité, il est nécessaire de réaliser un nouveau masque en découpant un écran opaque. Il a également été proposé en variante de cette technique d'introduire en plus un masque à saut de phase afin de moduler temporellement l'intensité de l'impulsion composite résultante (EMPLIT P ET AL: "PASSIVE AMPLITUDE AND PHASE PICOSECOND PULSE SHAPING",OPTICS LETTERS, vol. 17, no. 19, 1 octobre 1992).

Le document US 6,577,782 divulgue un perfectionnement de la technique de façonnage direct spatio-temporel dans lequel le masque opaque disposé devant le réseau est remplacé par un modulateur programmable d'amplitude, éclairé par le faisceau d'entrée et imagé sur le réseau de diffraction. Ce montage permet de modifier de manière dynamique le profil temporel des impulsions composites, mais est beaucoup plus complexe que celui initialement proposé par C. Froehly et collaborateurs. En outre, aucune des deux variantes connues de la technique de façonnage direct spatio-temporel ne permet de moduler la phase et/ou la polarisation des impulsions élémentaires, en plus que leur amplitude.

L'invention vise à remédier aux inconvénients précités de l'art antérieur.

Conformément à l'invention un tel but est atteint par un dispositif de façonnage d'impulsions laser selon la revendication 1. Un tel dispositif comporte notamment :

- une entrée pour un faisceau laser impulsionnel ;
- un modulateur spatial de phase, disposé sur le trajet dudit faisceau laser impulsionnel pour être éclairé par ce dernier ;
- un moyen de pilotage adapté pour configurer ledit modulateur spatial de phase de manière à émuler un réseau de diffraction présentant une efficacité de diffraction qui varie le long d'une direction spatiale identifiée par l'intersection de la surface du modulateur avec le plan de diffraction ; et
- un moyen de filtrage spatial d'un faisceau lumineux diffracté par ledit réseau ;

moyennant quoi une impulsion laser en entrée du dispositif est convertie en un train d'impulsions élémentaires de sortie présentant une modulation temporelle d'intensité et/ou de phase et/ou de polarisation.

L'entrée du dispositif peut être matérialisée par une ouverture dans un boîtier contenant ledit dispositif, par un diaphragme, par un objectif d'entrée, etc. Par « surface » du modulateur spatial de phase on entend la surface active dudit modulateur, éclairée par le faisceau et susceptible d'en modifier la phase.

L'invention présente plusieurs différences par rapport aux techniques de façonnage direct spatio-temporel connues de l'art antérieur :

- le réseau de diffraction « conventionnel », gravé ou holographique par exemple, est remplacé par un modulateur spatial de phase, programmable, ce qui permet une modification dynamique du profil temporel des impulsions de sortie ;
- un seul élément, le modulateur spatial de phase, remplace le réseau de diffraction et le masque d'amplitude/écran opaque des techniques d'art antérieur décrites ci-dessus ;
- l'utilisation d'un modulateur de phase - sans masque ou modulateur d'amplitude - permet de modifier tant l'amplitude que la phase ou encore la polarisation des impulsions élémentaires de sortie. Au contraire, l'utilisation d'un masque ou modulateur d'amplitude, connue de l'art antérieur, ne permet pas d'agir sur la phase des impulsions de sortie.

Selon différents modes de réalisation du dispositif de l'invention :

- Ledit modulateur de phase peut être un modulateur de phase pure, c'est à dire non susceptible d'introduire également une modulation d'amplitude.
- Ledit réseau de diffraction est un réseau blazé (ou « échelette ») présentant des traits dont l'angle de blaze varie le long de ladite direction spatiale.
- Au moins certains desdits traits peuvent présenter, par rapport à un agencement périodique, un décalage dans le plan de diffraction du réseau introduisant un déphasage des impulsions élémentaires correspondantes. Ce décalage peut se faire tant dans ladite direction spatiale, que dans une direction perpendiculaire au plan du réseau.
- Le dispositif peut comporter également un moyen de décomposition du faisceau laser impulsionnel d'entrée en deux faisceaux d'entrée séparés spatialement et présentant des états de polarisation (notamment linéaire) orthogonaux, dans lequel ledit moyen de pilotage est adapté pour configurer ledit modulateur spatial de phase de manière à émuler deux réseaux de diffraction distincts présentant des efficacités de diffraction qui varient, indépendamment l'une de l'autre, le long de ladite direction spatiale, chacun desdits réseaux étant éclairé par l'un desdits deux faisceaux d'entrée. Avantageusement, un tel dispositif peut comporter également un moyen de recombinaison de deux faisceaux de sortie présentant des états de polarisation (notamment linéaire) orthogonaux, diffractés par lesdits deux réseaux de diffraction.

- Ledit modulateur spatial de phase fonctionne de préférence en réflexion. Dans ce cas, lorsque ledit moyen de pilotage peut être adapté pour configurer ledit modulateur spatial de phase de manière à émuler un réseau de diffraction blazé, le modulateur spatial de phase peut être orienté de telle sorte que ledit réseau blazé se trouve en configuration de Littrow ; un séparateur de faisceau est donc prévu pour extraire le faisceau diffracté par ledit modulateur, se propageant à rebours vers ladite entrée.

- Ledit moyen de filtrage spatial peut comporter un moyen de focalisation d'un faisceau de lumière diffracté par ledit modulateur spatial de phase, présentant un plan focal ; et une fente, disposée dans ledit plan focal et orientée perpendiculairement à ladite direction spatiale. Plus particulièrement, le moyen de focalisation peut être choisi parmi une lentille et le modulateur spatial de phase lui-même, qui peut se charger d'imposer le déphasage moyen sphérique adapté.

- Le dispositif peut comporter un télescope d'élargissement dudit faisceau impulsionnel, disposé entre l'entrée et le modulateur spatial de phase, permettant d'ajuster la taille du faisceau à celle du modulateur.

Selon un mode de réalisation particulier de l'invention :

- ledit télescope peut comprendre une première et une deuxième lentille convergente ;
- ledit réseau de diffraction peut être un réseau blazé fonctionnant en réflexion et orienté de manière à se trouver en configuration de Littrow ;
- un séparateur de faisceau peut être prévu pour extraire le faisceau diffracté par ledit modulateur, se propageant à rebours vers ladite entrée, après que ce dernier ait traversé une deuxième fois ladite deuxième lentille convergente ; et
- une fente, orientée perpendiculairement à ladite direction spatiale, peut être disposée sur le trajet du faisceau extrait par ledit séparateur, dans le plan focal de ladite deuxième lentille, pour former ledit filtre spatial.

Un autre objet de l'invention est un procédé de façonnage d'impulsions laser suivant la revendication 8 et qui comporte notamment les étapes consistant à :

- configurer un modulateur spatial de phase de manière à émuler un réseau de diffraction présentant une efficacité de diffraction qui varie le long d'une direction spatiale identifiée par l'intersection de la surface du modulateur avec le plan de diffraction ;

- diriger un faisceau laser impulsionnel sur ledit modulateur spatial de phase ; et
- filtrer spatialement un faisceau lumineux diffracté par ledit réseau ;

moyennant quoi une impulsion laser en entrée du dispositif est convertie en un train d'impulsions élémentaires de sortie présentant une modulation temporelle d'intensité.

Selon différent modes de réalisation du procédé de l'invention :

- Ledit modulateur spatial de phase est configuré de manière à émuler un réseau de diffraction blazé, présentant des traits de section triangulaire dont l'angle de blaze varie le long de ladite direction spatiale.
- Au moins certains desdits traits peuvent présenter, par rapport à un agencement périodique, un décalage dans le plan de diffraction du réseau introduisant un déphasage des impulsions élémentaires correspondantes. Ce décalage peut se faire tant dans ladite direction spatiale, que dans une direction perpendiculaire au plan du réseau.
- Le procédé peut comporter également une étape consistant à décomposer le faisceau laser impulsionnel d'entrée en deux faisceaux d'entrée séparés spatialement et présentant des états de polarisation (notamment linéaire) orthogonaux, et dans lequel, dans ladite étape de configuration, on configure ledit modulateur spatial de phase de manière à émuler deux réseaux de diffraction distincts présentant des efficacités de diffraction qui varient, indépendamment l'une de l'autre, le long de ladite direction spatiale, chacun desdits réseaux étant éclairé par l'un desdits deux faisceaux d'entrée. Avantageusement, un tel procédé peut comporter également une étape consistant à recombiner deux faisceaux de sortie présentant des états de polarisation (notamment linéaire) orthogonaux, diffractés par lesdits deux réseaux de diffraction.
- Ledit réseau de diffraction peut fonctionner en réflexion et, plus particulièrement, peut être un réseau blazé orienté de manière à se trouver en configuration de Littrow.

D'autres caractéristiques, détails et avantages de l'invention ressortiront à la lecture de la description faite en référence aux dessins annexés donnés à titre d'exemple et qui représentent, respectivement :

- la figure 1A, le schéma d'un dispositif de façonnage direct spatio-temporel d'impulsions laser connu de l'art antérieur ;
- la figure 1B, un schéma illustrant la structure d'un réseau blazé et la notion de configuration de Littrow ;
- la figure 2, le schéma d'un dispositif selon un premier mode de réalisation de l'invention ;
- la figure 3, une vue latérale d'un réseau de diffraction blazé dont l'angle de blaze varie spatialement ;

- la figure 4, une représentation schématique d'une portion d'un modulateur de phase utilisé conformément à l'invention ;
- la figure 5, le schéma d'un dispositif selon un deuxième mode de réalisation de l'invention ; et
- les figures 6A, 6B et 6C, un dispositif selon un troisième mode de réalisation de l'invention.

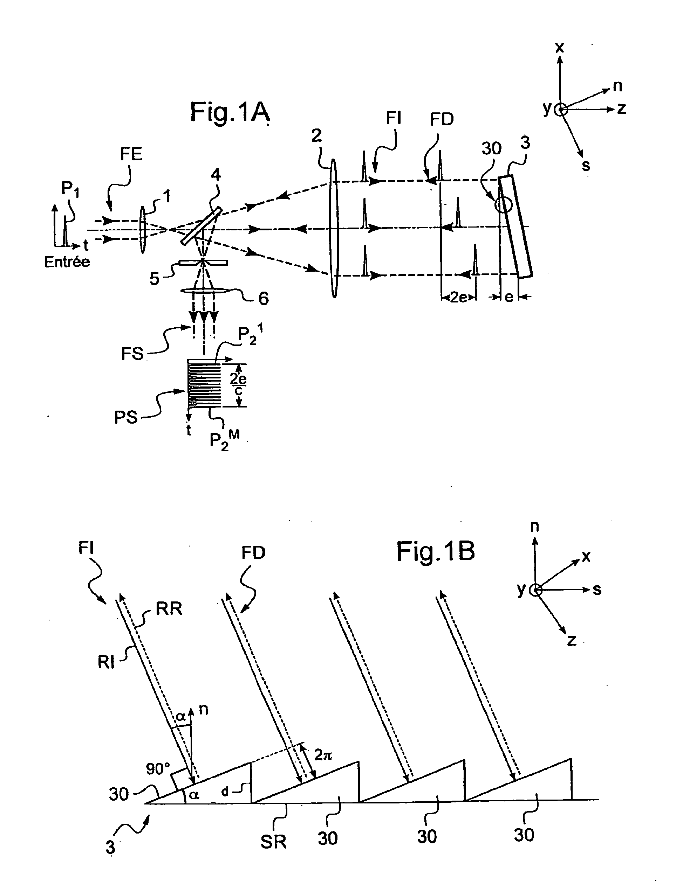

Le dispositif de la figure 1A comporte deux lentilles convergentes 1 et 2 formant un télescope dilatateur de faisceau. Ce télescope dilate un faisceau laser impulsionnel d'entrée FE pour l'adapter aux dimensions d'un réseau de diffraction 3, et le dirige vers la surface de ce réseau.

Le réseau 3 est un réseau de type « blazé » ou « échelette », fonctionnant en réflexion et orienté de manière à se trouver en configuration de Littrow.

Un réseau blazé est un réseau plan de diffraction qui a la propriété de concentrer une grande partie du flux optique incident dans le 1$^{er}$ ordre de diffraction (ou plus généralement dans un ordre N, avec N≠0) lorsque l'angle de diffraction correspondant est égal à un angle prédéterminé dit « angle de blaze ».

Typiquement, un réseau blazé fonctionne en réflexion (même si des réseaux blazés en transmission existent également) et présente une structure en « échelette » illustrée schématiquement sur la figure 1B.

Le réseau de la figure 1B comporte M traits, de profondeur d, qui présentent une section en dent de scie et forment ainsi une série de facettes planes 30, inclinées d'un angle α par rapport au plan du réseau. Il en résulte une surface du réseau en forme d'échelle, d'où le nom de « réseau échelette ». Intuitivement, on comprend que l'efficacité de diffraction du réseau est maximale lorsque l'angle de diffraction au 1$^{er}$ ordre (ou éventuellement à un ordre supérieur) est égal à l'angle de réflexion du faisceau lumineux incident par les facettes planes individuelles, qui se comportent ainsi comme des micro-miroirs.

Plus précisément, la figure 1B montre un réseau blazé en configuration « de Littrow ». Dans cette configuration, un faisceau lumineux incident FI forme un angle égal à α avec la normale n à la surface SR du réseau. Cela signifie que les facettes planes sont orientées perpendiculairement audit faisceau incident FI. Ainsi, chaque facette 30 est éclairée en incidence normale par un rayon RI dudit faisceau, et le réfléchit vers l'arrière (rayon RR, représenté en trait pointillé) conformément aux lois de l'optique géométrique. En outre, pour qu'on puisse parler de « configuration de Littrow », il est nécessaire que les rayons RR réfléchis par les différentes facettes interfèrent constructivement entre eux pour former un faisceau diffracté FD. Cette condition est vérifiée lorsque *2d cos(α) = N*λ avec N entier, λ étant la longueur d'onde du faisceau incident, supposé monochromatique. Cela signifie que la périodicité du réseau doit être telle que son angle de diffraction à l'ordre ±N soit égal à ±α.

Sur les figures 1A et 1B on indique par z la direction de propagation des faisceaux incident et diffracté, par y la direction d'orientation des traits du réseau, par x la direction perpendiculaire à y et à z, par s la direction identifiée par l'intersection entre la surface du réseau et le plan de diffraction (plan xz) et par n la normale à la surface SR du réseau.

La figure 1A montre que le faisceau incident FI, dilaté par le télescope 1, 2 de manière à éclairer M facettes élémentaires du réseau 3, est diffracté par ce dernier, et le faisceau diffracté FD se propage à rebours vers la lentille 2, c'est à dire le long de la direction -z.

On considère le cas où le faisceau lumineux d'entrée FI est un faisceau impulsionnel, constitué par une succession d'impulsions $P_1$ de durée τ de l'ordre de quelques picosecondes à quelques femtosecondes. L'intervalle entre deux impulsions d'entrée est très supérieure (3 à 6 ordres de grandeur) à τ. Par conséquent, dans la suite on se limitera à considérer une impulsion d'entrée $P_1$ isolée.

La figure 1A permet de voir qu'après diffraction par le réseau 3, chaque impulsion d'entrée est décomposée en M impulsions élémentaires $P_2^1$- $P_2^M$, décalées spatialement dans la direction z et temporellement. Le retard entre deux impulsions successives correspond à la différence de chemin optique entre les rayons réfléchis par deux facettes élémentaires adjacentes 30, et vaut donc $\Delta t = \dfrac{2d\cos\alpha}{c}$ .

Le faisceau diffracté, constitué par ces impulsions élémentaires décalées spatialement et temporellement, est focalisé par la lentille 2 du télescope d'entrée. Puis il est extrait dudit télescope par une lame séparatrice 4 et envoyé vers une fente 5, située dans un plan focal de ladite lentille 2 et orientée selon la direction y.

En variante, on peut remplacer la lame séparatrice 4 par un miroir coupé placé en dessous (ou en dessus) du faisceau incident. Pour cela il faut introduire un petit angle (quelques degrés) entre la normale au réseau et le plan de la figure ; ainsi le faisceau réfléchi n'appartient plus précisément au plan de la figure ; le faisceau incident et le faisceau réfléchi sont alors légèrement séparés spatialement au voisinage du miroir coupé ; l'arête de ce dernier se trouve juste en dessous du faisceau incident et juste au dessus du faisceau réfléchi qu'il intercepte (ou vice-versa).

La fente 5 réalise un filtrage spatial (passe-bas) du faisceau diffracté pour en homogénéiser le profil spatial. Le faisceau filtré ainsi obtenu est enfin collimaté par une lentille 6 agencée de manière à former, avec la lentille 2, un télescope de sortie. Il est possible de démontrer que le faisceau de sortie FS présente un profil temporel constitué par un train de M impulsions élémentaires dont la durée totale est

$$T = M \cdot \Delta t = \dfrac{2dM\cos\alpha}{c} = \dfrac{2e}{c}, \text{ où } e = dM\cos\alpha$$

est la longueur de la projection du réseau 3 (ou, plus généralement, de la portion du réseau qui est effectivement éclairée par le faisceau FI) sur l'axe z.

Dans l'exemple illustré sur la figure 1A, la durée $\tau$ de chaque impulsion élémentaire $P_2^i$ (i=1 - M) est inférieure à l'intervalle $\Delta t$ entre deux impulsions ; par conséquent, l'impulsion composite de sortie PS se présente sous la forme d'un train d'impulsions séparées les unes des autres. On remarquera que la condition $\Delta t > \tau$ implique $2d \cos\alpha \gg \lambda$, et donc un ordre de diffraction élevé. Pour obtenir des impulsions de sortie résolues en temps alors qu'on opère au premier ordre de diffraction (ou plus généralement à un ordre faible) il est possible de masquer une ou plusieurs facettes élémentaires du réseau pour créer une région non réfléchissante à laquelle correspond, dans le domaine temporel, un intervalle caractérisé par une intensité optique nulle séparant deux impulsions de sortie.

Si, au contraire, $\tau > \Delta t$ (cas le plus usuel), alors les impulsions élémentaires seront confondues dans l'impulsion de sortie. Les expressions « impulsions composite » et « train d'impulsions élémentaires » seront utilisées indifféremment pour indiquer tant une succession d'impulsions élémentaires bien résolues qu'une succession d'impulsions partiellement superposées de manière à ne plus pouvoir être distinguées.

Dans l'exemple illustré sur la figure 1A, toutes les impulsions élémentaires de sortie ont la même énergie. Cela présuppose que les M facettes élémentaires du réseau 3 reçoivent - et réfléchissent - un même flux lumineux. Dans un cas plus général, l'éclairage du réseau par le faisceau incident n'est pas parfaitement homogène et cela introduit une variation d'énergie entre les différentes impulsions élémentaires.

L'article précité de C. Froehly et al. propose de régler l'énergie de chaque impulsion élémentaire grâce à un écran opaque présentant une ouverture. Cet écran masque chaque trait du réseau 3 sur une partie de sa longueur (mesurée le long de la direction y). Plus la fraction masquée de la surface du i-ème trait est importante, plus l'énergie de l'impulsion élémentaire $P_2^i$ est faible. Comme expliqué plus haut, cette solution est pénalisée par son manque de flexibilité.

Afin de remédier à cet inconvénient, le document précité US 6,577,782 propose de régler l'énergie des impulsions élémentaires en modifiant le profil transverse du faisceau incident FI grâce à un modulateur spatial d'amplitude. Cette solution conduit à un montage complexe, et en tout cas elle ne permet pas de moduler la phase de l'impulsion composite de sortie.

Une idée à la base de l'invention consiste à remplacer le réseau de diffraction 3 par un modulateur spatial de phase, programmable et configuré de manière à émuler un réseau de diffraction dont l'efficacité de diffraction varie spatialement dans la direction s. Cette variation spatiale d'efficacité se traduit par une variation d'énergie des impulsions élémentaires du faisceau diffracté, et donc par une modulation du profil temporel de l'impulsion composite de sortie, et cela sans besoin d'utiliser un écran opaque ou un modulateur spatial d'amplitude. Le caractère programmable ou reconfigurable du modulateur de phase permet de modifier de manière dynamique les propriétés du réseau émulé, et par conséquent le profil temporel de l'impulsion composite de sortie.

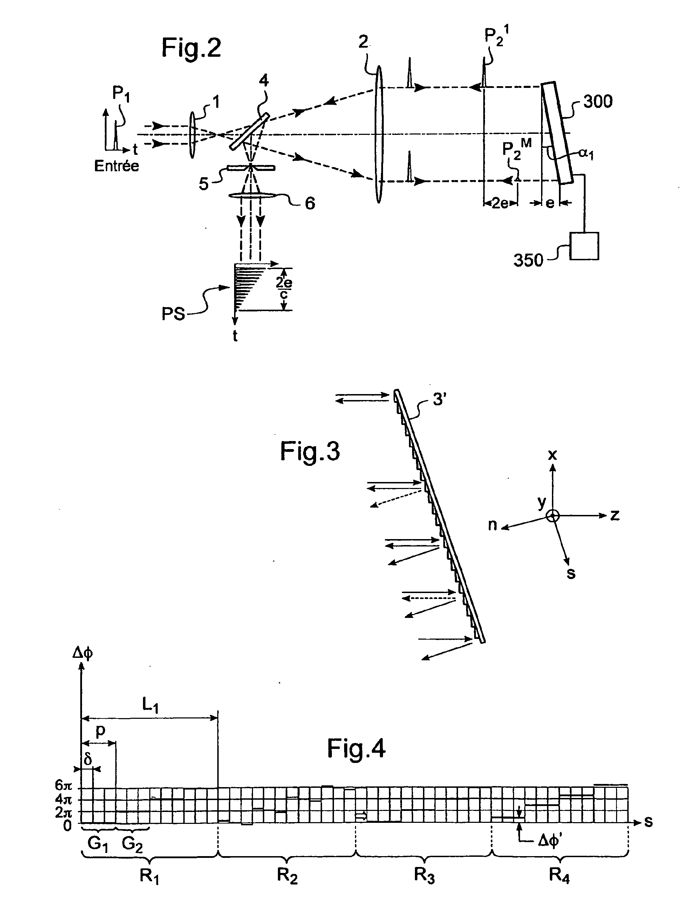

La figure 3 montre un réseau échelette 3' dans lequel l'angle $\alpha^i$ formé par chaque facette élémentaire $30^i$ avec la surface du réseau diminue le long de la direction s : $\alpha^1 > \alpha^2 > ... > \alpha^M$. La normale au réseau forme un angle $\alpha^1$ avec un faisceau lumineux incident FI supposé monochromatique, de longueur d'onde $\lambda$. En outre, la périodicité du réseau est telle que l'angle de diffraction à l'ordre $N \neq 0$ dudit faisceau soit égal à $\alpha^1$. Dans ces conditions, la première facette élémentaire diffracte efficacement vers l'arrière la lumière incidente, exactement comme dans un réseau blazé en configuration de Littrow. Mais les autres facettes présentent une inclinaison $\alpha^i$ non optimale, et par conséquent une efficacité de diffraction au premier ordre de plus en plus faible.

Le dispositif de la figure 2 utilise un modulateur spatial de phase 300 configuré, à l'aide de l'ordinateur 350, pour émuler le réseau échelette 3' à efficacité de diffraction variable. Comme on peut le voir sur la figure, ce dispositif permet d'obtenir une impulsion composite de sortie se présentant sous la forme d'un train d'impulsions élémentaires $P_2^i$ d'intensité décroissante.

La figure 4 montre comment, concrètement, un modulateur de phase peut être configuré de manière à émuler un réseau blazé. Dans un réseau échelette conventionnel, chaque facette élémentaire, inclinée d'un angle $\alpha^i$, réfléchit la lumière incidente et introduit un déphasage $\Delta\phi$ qui varie linéairement le long de la direction s entre 0 et 2n radians (ou, plus généralement, 2Nn avec N entier). Dans un réseau à efficacité de diffraction variable, comme le réseau 3' de la figure 3, le déphasage maximal introduit par une facette peut être inférieur à $2\pi$ radians.

Le modulateur de phase programmable 300 est constitué par des pixels organisés selon des lignes (parallèles à l'axe y) et des colonnes (le long de la direction s). Chaque groupe $G_i$ de, par exemple, trois lignes est destiné à émuler une facette du réseau 3.

La figure 4 montre le déphasage $\Delta\phi$, mesuré en aller-retour, sur le chemin optique défini par la condition de Littrow (retour inverse) qui est imposé d'une part par la matrice à cristaux liquide et d'autre part par l'effet d'inclinaison du plan de la matrice (angle $\alpha$) ; la matrice, par elle-même, introduit des déphasages compris entre 0 et 2n radians, qui se superposent au déphasage linéaire introduit pas l'effet d'inclinaison. Les pixels de la matrice ont une taille constante égale à $\delta$. Les pixels d'une même colonne (direction y) sont dans le même état. Les colonnes sont regroupées par paquets (3 colonnes de pixels par paquet sur l'exemple de la figure 4). Un paquet forme un motif, ou trait, d'un réseau de diffraction local $R_i$ de taille $L_i$. La taille d'un motif, qui est aussi égale au pas du réseau périodique, est constante et sa valeur est indiquée par « p ». Contrairement à ce qui est représenté sur la figure 4, la longueur $L_i$ du réseau local $R_i$ est susceptible de varier dans la direction s. Les $R_i$ sont des réseaux de diffraction de phase pure de type échelette. Par rapport à un réseau à échelette standard, la variation de phase le long d'un motif dans la direction s n'est pas continue. Celle-ci varie de façon discrète à cause de la structure pixélisée de la matrice. Cette discrétisation affecte l'efficacité énergétique des réseaux sans remettre en cause leur comportement cohérent qui est décrit ci-dessous. L'ensemble des réseaux Ri forme un réseau résultant inhomogène ($R_i{\neq}R_j$) couvrant toute la matrice. La figure 4 présente 4 réseaux locaux ($R_i$, i=1 à 4) pour 4 états différents de modulation d'amplitude et de phase de l'onde diffractée : respectivement, amplitude et phase de référence, amplitude modulée et phase de référence, amplitude de référence et phase modulée par décalage transverse du réseau local, amplitude de référence et phase modulée par « piston de phase » (décalage le long de l'axe z, ajout d'une phase constante).

Le réseau $R_1$ émule un réseau blazé en configuration de Littrow ; les lignes de chaque groupe $G_i$ introduisent un déphasage constant, ce qui correspond à une efficacité de diffraction maximale dans l'ordre de diffraction utilisé. La phase de l'onde diffractée par ce réseau est choisie arbitrairement comme origine des phases. La phase de l'onde diffractée par le réseau $R_2$ est identique à la précédente.

Dans le réseau local $R_2$, les lignes de chaque groupe $G_i$ introduisent un déphasage qui n'est plus constant mais varie linéairement. Ces groupes émulent ainsi des facettes de réseau blazé qui ne sont pas parfaitement orientées dans la direction de Littrow de telle sorte que l'efficacité de diffraction du réseau dans cette direction est diminuée, ce qui permet de moduler l'amplitude de l'onde diffractée.

Les réseaux locaux $R_3$ et $R_4$ ont une efficacité de diffraction maximale, comme le réseau $R_1$.

Le réseau $R_3$ est en effet identique au réseau $R_1$, sauf en ce que ses motifs sont translatés d'un pixel vers la droite (la partie la plus à droite du quatrième motif est reportée sur la gauche : il s'agit donc d'un décalage circulaire). Cela introduit un déphasage de l'onde diffractée, en l'espèce de $\Delta\phi=2\pi/3$ rad.. Un décalage de deux pixels introduirait un déphasage de $4\pi/3$, et un décalage de trois pixels serait sans effet. La dynamique de contrôle de phase est donc égale au nombre de pixels par motif du réseau.

La configuration de $R_4$ est identique celle du réseau de référence $R_1$ sauf en ce qu'un déphasage constant $\Delta\phi'$ a été ajouté à chaque pixel (« piston de phase »), ce qui affecte directement la phase de l'onde diffractée par ce réseau.

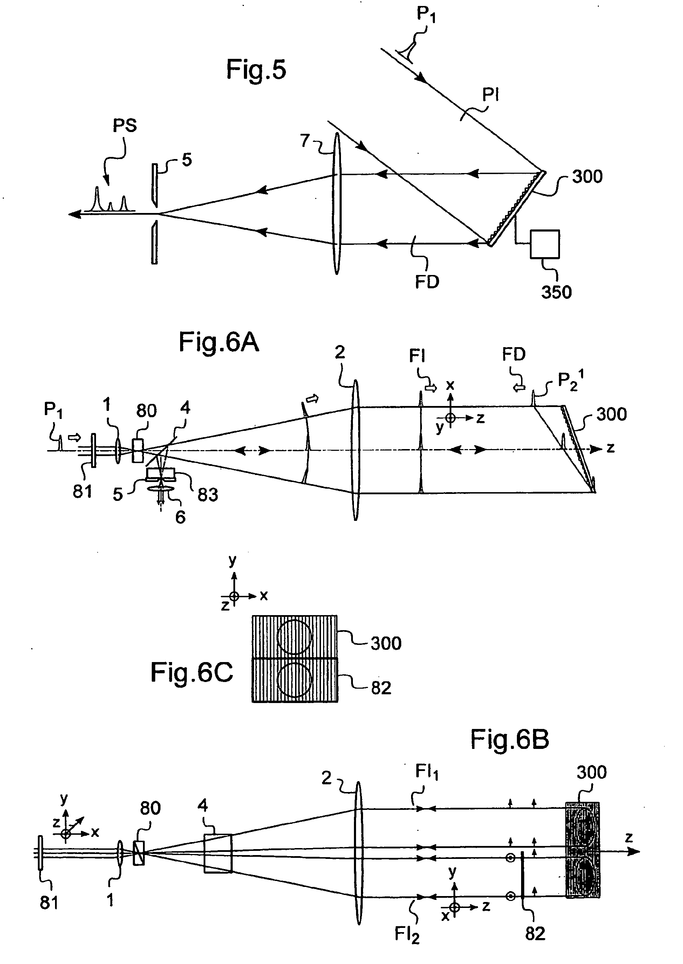

Les figures 6A et 6B montrent, en vue de haut et de côté respectivement, un dispositif selon un mode de réalisation de l'invention permettant de moduler la polarisation des impulsions laser d'entrée. Un tel dispositif se différencie de celui de la figure 2 essentiellement en ce qu'un (premier) composant biréfringent (prisme de Wollaston) 80 est disposé au foyer commun aux lentilles 1 et 2 ; et

Optionnellement, en outre :

- une première lame de phase à demi-onde 81 peut être située à l'entrée du dispositif, en amont de la lentille 1 ;
- une deuxième lame de phase à demi-onde 82 peut être positionnée avant une moitié (dans la direction y) du modulateur de phase 300 ; et
- un deuxième prisme biréfringent de Wollaston 83 peut être disposé juste avant la fente de sortie 5.

Avantageusement, le ou les prisme(s) de Wollaston présente(nt) un petit angle (quelques degrés, typiquement 1 à 5°, de préférence 2° environ) et une faible épaisseur (typiquement 1 à 5 mm, par exemple 2 mm). Le deuxième prisme 83, s'il est présent, doit de préférence être symétrique au premier.

Le prisme biréfringent 80 dédouble le faisceau incident dans le plan orthogonal au plan de dispersion en deux faisceaux polarisés orthogonalement se propageant dans deux directions différentes. La lame de phase demi-onde 81, positionnée en entrée, permet d'ajuster l'amplitude des deux faisceaux issus du prisme en modifiant la direction de polarisation linéaire du faisceau en entrée (vecteur E sur la figure 6B). Après la lentille 2, le modulateur spatial de phase 300 reçoit deux faisceaux parallèles distincts, $FI_1$, $FI_2$ issus du prisme de Wollaston et présentant donc des directions de polarisation linéaire orthogonales. La mise en forme cohérente (modulation d'amplitude et de phase) se déroule alors indépendamment sur ces deux faisceaux avec le modulateur spatial de phase 300 divisé en deux zones (voir la figure 6C) donnant ainsi accès à tous les états de polarisation possibles. Au retour les deux faisceaux polarisés orthogonalement se recombinent à travers le deuxième prisme de Wollaston 83, symétrique du premier, qui compense aussi la différence de temps de groupe introduite par le premier prisme (ce qui est surtout utile pour des impulsions d'entrée très courtes, de durée inférieure à 100 fs, et dans le cas où l'emploi de prismes de Wollaston épais est nécessaire).

Il est aussi possible d'envisager une configuration utilisant uniquement le premier élément biréfringent (prisme de Wollaston). Dans ce cas, le filtrage spatial devrait être effectué dans le plan focal objet de la lentille 2 et l'éjection du faisceau se ferait après collimation retour, c'est à dire à gauche de la lentille 1. Une telle configuration pose des problèmes d'encombrement et est aussi pénalisée par l'effet de la différence de temps de groupe entre les deux polarisations. Par conséquent l'utilisation de deux éléments biréfringents est préférée.

La polarisation d'un des deux faisceaux incidents sur la matrice de phase peut être tournée de 90° à l'aide d'une lame demi-onde additionnelle 82 placée sur la moitié du champ du modulateur spatial de phase. Cette opération permet d'optimiser l'efficacité de diffraction du modulateur spatial de phase sans remettre en cause le principe de fonctionnement de l'appareil. Cette deuxième lame de phase est traversée une deuxième fois en sens inverse après diffraction par le modulateur, ce qui permet de restituer la direction de polarisation initiale sur ce trajet.

On a considéré le cas d'une décomposition du faisceau d'entrée en deux faisceaux polarisés linéairement selon des directions de polarisation orthogonales. On pourrait aussi envisager une décomposition en deux faisceaux présentant des polarisations circulaires droite et gauche ; dans ce cas il est nécessaire d'utiliser un modulateur dont les pixels présentent une activité optique, par exemple utilisant des cristaux liquides de type cholestériques. Plus généralement encore, toute décomposition en deux états de polarisation orthogonaux est envisageable en principe. Cependant, l'utilisation de faisceaux polarisés linéairement est préférée, car beaucoup plus simple à mettre en oeuvre.

Comme expliqué plus haut, afin d'obtenir des impulsions de sortie résolues en temps il est possible de séparer les régions diffractantes du modulateur spatial de phase - engendrant lesdites impulsions - par des régions non diffractantes, caractérisées par un déphasage $\Delta\phi$ constant et correspondant aux intervalles d'intensité lumineuse nulle entre les impulsions.

L'invention a été décrite en référence à un exemple dans lequel le modulateur de phase émule un réseau blazé en configuration de Littrow. Il n'est cependant nullement nécessaire d'opérer en configuration de Littrow, comme le montre le dispositif de la figure 5 (le télescope d'entrée n'est pas représenté, pas plus que la lentille de collimation de sortie 6 ; une lentille 7 précède la fente 5 de filtrage spatial).

Le modulateur de phase utilisé pour la mise en oeuvre de l'invention peut être un modulateur à cristaux liquides, tel que le dispositif « PLUTO SLM » de la société HOLOEYE PHOTONICS AG, dont les différentes versions opèrent à des longueurs d'onde comprise entre 420 nm (composante violette de la lumière visible) et 1550 nm (proche infrarouge). Il est également possible d'utiliser des modulateurs de type micro-électromécanique : ces dispositifs peuvent être utilisés avantageusement pour le façonnage d'impulsions dans l'ultraviolet, ou lorsque l'impulsion d'entrée est extrêmement courte (de l'ordre de 10 fs ou moins) et présente de ce fait une bande très large et une intensité de pic élevée.

Dans l'exemple de la figure 4, trois pixels (ou plus précisément colonnes de pixels) ont été utilisées pour émuler chaque facette du réseau. Cela semble un minimum. Un nombre plus élevé de pixels peut bien entendu être utilisé, à condition de disposer d'un modulateur spatial de phase présentant une résolution spatiale suffisante.

Les lentilles 1, 2, 6, 7 peuvent être remplacées par des miroirs concaves, notamment un miroir parabolique hors d'axe pour la lentille 2. Cette solution peut s'avérer intéressante pour compacifier le dispositif et lorsque l'impulsion d'entrée est extrêmement courte, afin d'éviter la dispersion introduite par les lentilles. Des miroirs concaves, de préférence utilisés en incidence rasante, peuvent également être utilisés lorsqu'on souhaite façonner des impulsions dans l'ultraviolet extrême (longueur d'onde inférieure à 100 nm environ) ; en effet, il n'y a pas de lentilles qui soient transparentes à ces longueurs d'onde.

Dans le cas du dispositif de la figure 5, la lentille 7 peut être omise si le modulateur de phase accomplit lui-même la fonction de focalisation. Cela peut être obtenu en utilisant un modulateur présentant une surface concave, ou introduisant une variation quadratique de phase qui émule une telle surface.

Le modulateur de phase peut également fonctionner en transmission. Cependant, un fonctionnement en réflexion est généralement préféré car cela permet d'éviter d'introduire des effets de chromatisme, de disposer d'une résolution spatiale et d'un nombre de pixels suffisants et d'opérer en configuration de Littrow.

Les impulsions d'entrée peuvent être aussi courtes que possible, jusqu'à une durée de quelques femtosecondes dans le visible ou l'infrarouge proche, voire de quelques dixièmes de femtosecondes dans l'ultraviolet extrême. Leur durée maximale peut atteindre le picoseconde, voire 10 ps environ ; au-delà la mise en oeuvre de l'invention, sans être impossible, devient peu pratique.

**Revendications**

1. Dispositif de façonnage d'impulsions laser destiné à convertir une impulsion laser (P1) d'un faisceau laser impulsionnel d'entrée (FE) en un train d'impulsions élémentaires de sortie (PS) présentant une modulation temporelle d'intensité, ce dispositif comportant :

   - une entrée pour laisser entrer un faisceau laser impulsionnel d'entrée (FE) ;
   - un modulateur spatial de phase (300), disposé sur le trajet dudit faisceau laser impulsionnel d'entrée (FE) pour être éclairé par ce dernier et constitué par des pixels disposés sur une surface du modulateur, programmables chacun séparément pour introduire un déphasage compris entre 0 et $2\pi$, organisés sur la surface du modulateur, selon des lignes, orientées suivant une direction (y) perpendiculaire à une direction (2), et des colonnes, perpendiculaires aux lignes, orientées suivant une direction spatiale (s) contenue dans la plan (xz) formé par la direction (z) et la direction (x), la direction (x) étant perpendiculaire à la direction (y) et à la direction (z),
   - un moyen de pilotage (350) pour programmer les déphasages des pixels dudit modulateur spatial de phase (300);

- un télescope (1, 2) d'élargissement dudit faisceau impulsionnel d'entrée (FE) disposé entre l'entrée et le modulateur spatial de phase (300), permettant d'ajuster la taille du faisceau laser impulsionnel d'entrée (FE) à celle du modulateur spatial de phase (300) et formant un faisceau incident FI orienté suivant une direction d'incidence contenue dans un plan perpendiculaire à la direction (y) des lignes ;

- un moyen de filtrage spatial (5) du faisceau lumineux diffracté (FD) par le modulateur spatial de phase (300) se propageant suivant la direction (z) ;

les déphasages des pixels du modulateur spatial de phase (300) étant programmés, de manière à émuler un réseau échelette de diffraction (3, 3') composé de facettes élémentaires;

les facettes élémentaires étant arrangées selon la direction (y) des lignes, et les angles formés dans le plan (xz), par les facettes élémentaires avec la direction spatiale (s), dit angles de facettes élémentaires, étant variables le long de la direction spatiale (s).

**2.** Dispositif selon la revendication 1 dans lequel au moins certaines des facettes élémentaires émulées présentent, par rapport à un agencement périodique, un décalage dans le plan de diffraction du réseau, introduisant un déphasage des impulsions élémentaires de sortie (PS) correspondantes.

**3.** Dispositif selon l'une des revendications précédentes, comportant également un moyen (80) de décomposition du faisceau laser impulsionnel d'entrée en deux faisceaux d'entrée séparés spatialement et présentant des états de polarisation orthogonaux, dans lequel ledit moyen de pilotage (350) est adapté pour configurer ledit modulateur spatial de phase (300) de manière à émuler deux réseaux échelette de diffraction distincts présentant respectivement desdits angles de facettes élémentaires qui varient, indépendamment l'un de l'autre, le long de ladite direction spatiale (s), chacun desdits réseaux étant éclairé par l'un desdits deux faisceaux d'entrée.

**4.** Dispositif selon la revendication 3, comportant également un moyen (83) de recombinaison de deux faisceaux de sortie présentant des états de polarisation orthogonaux, diffractés par lesdits deux réseaux échelette de diffraction,

**5.** Dispositif selon l'une des revendications précédentes dans lequel ledit modulateur spatial de phase (300) fonctionne en réflexion.

**6.** Dispositif selon la revendication 6 dans lequel :

- ledit moyen de pilotage (350) est adapté pour configurer ledit modulateur spatial de phase (300) de manière à émuler un réseau de diffraction blazé ;

- le modulateur spatial de phase (300) est orienté de telle sorte que ledit réseau blazé se trouve en configuration de Littrow ; et

- un séparateur de faisceau (4) est prévu pour extraire le faisceau diffracté (FD) par ledit modulateur, se propageant à rebours vers ladite entrée.

**7.** Dispositif selon l'une des revendications précédentes dans lequel ledit télescope comprend une première (1) et une deuxième (2) lentille convergente, et dans lequel :

- ledit réseau échelette de diffraction est un réseau blazé fonctionnant en réflexion, orienté de manière à se trouver en configuration de Littrow ;

- un séparateur de faisceau (4) est prévu pour extraire le faisceau diffracté (FD) par ledit modulateur, se propageant à rebours vers ladite entrée, après que ce dernier ait traversé une deuxième fois ladite deuxième lentille convergente (2) ;

- une fente (5), orientée perpendiculairement à ladite direction spatiale, est disposée sur le trajet du faisceau extrait par ledit séparateur, dans le plan focal de ladite deuxième lentille, pour former ledit filtre spatial.

**8.** Procédé de façonnage d'impulsions laser destiné à convertir une impulsion laser (P1) d'un faisceau laser impulsionnel d'entrée en un train d'impulsions élémentaires de sortie (PS) présentant une modulation temporelle d'intensité, comportant les étapes consistant à :

- configurer un modulateur spatial de phase (300) tel que défini selon la revendication 1;

- diriger un faisceau laser impulsionnel (FI) sur ledit modulateur spatial de phase (300) ; et

- filtrer spatialement un faisceau lumineux (FD) diffracté par ledit modulateur spatial de phase (300) émulant ledit réseau échelette de diffraction (3,3').

**9.** Procédé selon la revendication 8 dans lequel au moins certaines des facettes élémentaires émulées présentent, par rapport à un agencement périodique, un décalage dans le plan de diffraction du réseau introduisant un déphasage des impulsions élémentaires de sortie (PS) correspondantes.

**10.** Procédé selon l'une des revendications 8 à 9, comportant également une étape consistant à décomposer le faisceau laser impulsionnel d'entrée en deux faisceaux d'entrée séparés spatialement et présentant des états de polarisation orthogonaux, et dans lequel, dans ladite étape de configuration, on configure ledit modulateur spatial de phase de manière à émuler deux réseaux échelette de diffraction distincts présentant respectivement desdits angles de facettes élémentaires qui varient, indépendamment l'un de l'autre, le long de ladite direction spatiale (s), chacun desdits réseaux étant éclairé par l'un desdits deux faisceaux d'entrée.

11. Procédé selon la revendication 10, comportant également une étape consistant à recombiner deux faisceaux de sortie présentant des états de polarisation orthogonaux, diffractés par lesdits deux réseaux échelette de diffraction.

**Patentansprüche**

1. Vorrichtung zur Formung von Laserpulsen, welche dazu bestimmt ist, einen Laserpuls (P1) eines gepulsten Eingangslaserstrahls (FE) in eine Folge von Ausgangselementarimpulsen (PS), welche eine zeitliche Intensitätsmodulation aufweisen, zu konvertieren, wobei diese Vorrichtung umfasst:

   - einen Eingang, um einen gepulsten Eingangslaserstrahl (FE) eintreten zu lassen;
   - einen räumlichen Phasenmodulator (300), welcher in dem Weg des gepulsten Eingangslaserstrahls (FE) angeordnet ist, um durch den letzteren beleuchtet zu werden und gebildet ist durch auf einer Oberfläche des Modulators angeordnete Pixel, welche jeweils separat programmierbar sind, um eine zwischen 0 und $2\pi$ enthalte Phasenverschiebung einzuführen, welche auf der Oberfläche des Modulators organisiert sind entlang von Reihen, die entlang einer Richtung (y) senkrecht zu einer Richtung (z) orientiert sind, und zu den Reihen senkrechten Spalten, die entlang einer räumlichen Richtung (s) orientiert sind, welche in der Ebene (xz) enthalten ist, die gebildet ist durch die Richtung (z) und die Richtung (x), wobei die Richtung (x) senkrecht zu der Richtung (y) und der Richtung (z) ist,
   - ein Steuermittel (350), um die Phasenverschiebungen der Pixel des räumlichen Phasenmodulators (300) zu programmieren;
   - ein Teleskop (1, 2) zur Vergrößerung des gepulsten Eingangsstrahls (FE), welches zwischen dem Eingang und dem räumlichen Phasenmodulator (300) angeordnet ist, welches es ermöglicht, die Weite des gepulsten Eingangslaserstrahls (FE) an diejenige des räumlichen Phasenmodulators (300) anzupassen, und einen Einfallsstrahl (FE) bildet, welcher entlang einer Einfallsrichtung orientiert ist, die in einer Ebene senkrecht zu der Richtung (y) der Reihen enthalten ist;
   - ein Mittel zur räumlichen Filterung (5) des durch den räumlichen Phasenmodulator (300) gebeugten Lichtstrahls (FD), welcher sich entlang der Richtung (z) ausbreitet;
   wobei die Phasenverschiebungen der Pixel des räumlichen Phasenmodulators (300) auf solche Weise programmiert sind, dass ein Echelette-Beugungsgitter (3, 3') emuliert wird, welches aus Elementarfacetten zusammengesetzt ist; wobei die Elementarfacetten entlang der Richtung (y) der Reihen angeordert sind und die in der Ebene (xz) von den Elementarfacetten mit der räumlichen Richtung (s) gebildeten Winkel, genannt Elementarfacettenwinkel, entlang der räumlichen Richtung (s) variabel sind.

2. Vorrichtung nach Anspruch 1, wobei wenigstens bestimmte der emulierten Elementarfacetten im Verhältnis zu einer periodischen Anordnung einen Versatz in der Beugungsebene des Gitters aufweisen, was eine Phasenverschiebung von entsprechenden Ausgangselementarimpulsen (PS) einführt.

3. Vorrichtung nach einem der vorhergehenden Ansprüche, umfassend außerdem ein Mittel (80) zur Zerlegung des gepulsten Eingangslaserstrahls in zwei Eingangsstrahlen, welche räumlich getrennt sind und orthogonale Polarisationszustände aufweisen, wobei das Steuermittel (350) dazu ausgestaltet ist, den räumlichen Phasenmodulator (300) auf solche Weise zu konfigurieren, dass zwei separate Echelette-Beugungsgitter emuliert werden, welche jeweils die genannten Elementarfacetttenwinkel aufweisen, welche unabhängig voneinander entlang der räumlichen Richtung (s) variieren, wobei jedes der Gitter von einem der zwei Eingangsstrahlen beleuchtet wird.

4. Vorrichtung nach Anspruch 3, umfassen außerdem ein Mittel (83) zur Wiederzusammensetzung von zwei durch die zwei Echelette-Gitter gebeugten Ausgangsstrahlen, welche orthogonale Polarisationszustände aufweisen.

5. Vorrichtung nach einem der vorhergehenden Ansprüche, wobei der räumliche Phasenmodulator (300) in Reflexion arbeitet.

6. Vorrichtung nach Anspruch 6, wobei :

   - das Steuermittel (350) dazu ausgestaltet ist, den räumlichen Phasenmodulator (300) derart zu konfigurieren, dass ein Blaze-Beugungsgitter emuliert wird;
   - der räumliche Phasenmodulator (300) auf solche Weise orientiert ist, dass das Blaze-Gitter sich in einer Littrow-Konfiguration befindet; und
- ein Strahltrenner (4) vorgesehen ist, um den von dem Modulator gebeugten Strahl (FD), welcher sich zurück in Richtung des Eingangs ausbreitet, zu extrahieren.

7. Vorrichtung nach einem der vorhergehenden Ansprüche, wobei das Teleskop eine erste (1) und eine zweite (2) Sammellinse umfasst, und wobei:

- das Echelette-Beugungsgitter ein in Reflexion arbeitendes Blaze-Gitter ist, welches derart orientiert ist, dass es sich in einer Littrow-Konfiguration befindet;
- ein Strahltrenner (4) vorgesehen ist, um den von dem Modulator gebeugten Strahl (FD), welcher sich zurück in Richtung des Eingangs ausbreitet, zu extrahieren, nachdem der letztere ein zweites Mal die zweite Sammellinse (2) durchlaufen hat;
- ein Schlitz (5), welcher senkrecht zu der räumlichen Richtung orientiert ist, in dem Weg des von dem Trenner extrahierten Strahls, in der Fokusebene der zweiten Linse, vorgesehen ist, um den räumlichen Filter auszubilden.

8. Verfahren zur Formung von Laserimpulsen, welches dazu bestimmt ist, einen Laserpuls (P1) eines gepulsten Eingangslaserstrahls in eine Folge von Ausgangselementarimpulsen (PS), welche eine zeitliche Intensitätsmodulation aufweisen, zu konvertieren, umfassend Schritte beruhend auf:

- Konfigurierten eines räumlichen Phasenmodulators (300) wie gemäß dem Anspruch 1 definiert;
- Lenken eines gepulsten Laserstrahls (FE) auf den räumlichen Phasenmodulator (300); und
- räumliches Filtern eines von dem das Echelette-Beugungsgitter (3, 3') emulierenden räumlichen Phasenmodulator (300) gebeugten Lichtstrahls (FD).

9. Verfahren nach Anspruch 8, wobei wenigstens bestimmte der emulierten Elementarfacetten im Verhältnis zu einer periodischen Anordnung einen Versatz in der Ebene des Gitters aufweisen, was eine Phasenverschiebung von entsprechenden Elementarausgangsimpulsen (PS) einführt.

10. Verfahren nach einem der Ansprüche 8-9, umfassend außerdem einen Schritt, welcher darin besteht, den gepulsten Eingangslaserstrahl in zwei Eingangsstrahlen zu zerlegen, welche räumlich getrennt sind und orthogonale Polarisationszustände aufweisen, und wobei bei dem Konfigurationsschritt der räumliche Phasenmodulator auf solche Weise konfiguriert wird, dass zwei separate Echelette-Beugungsgitter emuliert werden, welche jeweils die Elementarfacettenwinkel aufweisen, welche unabhängig voneinander entlang der räumlichen Richtung (s) variieren, wobei jedes der Gitter von einem der zwei Eingangsstrahlen beleuchtet wird.

11. Verfahren nach Anspruch 10, umfassend außerdem einen Schritt, welcher darin besteht, zwei von den zwei Echelette-Beugungsgittern gebeugte Ausgangsstrahlen, welche orthogonale Polarisationszustände aufweisen, zu rekombinieren.

## Claims

1. Device for forming laser pulses intended to convert a laser pulse (P1) from an input pulsed laser beam (FE) into a train of individual output pulses (PS) exhibiting temporal intensity modulation, this device comprising:

- an input for allowing an input pulsed laser beam (FE) to enter;
- a spatial phase modulator (300), arranged on the path of said input pulsed laser beam (FE) to be illuminated thereby, and consisting of pixels arranged on a surface of the modulator, each programmable separately to introduce a phase shift of between 0 and $2\pi$, organised on the surface of the modulator in lines, oriented in a direction (y) at right angles to a direction (z), and columns at right angles to the lines, oriented in a spatial direction (s) contained in the plane (xz) formed by the direction (z) and the direction (x), the direction (x) being at right angles to the direction (y) and to the direction (z),
- a control means (350) for programming the phase shifts of the pixels of said spatial phase modulator (300);
- a telescope (1, 2) for enlaring said input pulsed beam (FE), arranged between the input and the spatial phase modulator (300), making it possible to adjust the size of the input pulsed laser beam (FE) to that of the spatial phase modulator (300) and forming an incident beam (FI) oriented in a direction of incidence contained in a plane at right angles to the direction (y) of the lines;
- a spatial filtering means (5) for the light beam diffracted (FD) by the spatial phase modulator (300) that is propagated in the direction (z);
the phase shifts of the pixels of the spatial phase modulator (300) being programmed, in such a way as to emulate an echelle diffraction grating (3, 3') made up of individual facets;
the individual facets being arranged in the direction (y) of the lines, and the angles formed, in the plane (xz), by the individual facets with the spatial direction (s), known as the individual facet angles, being varied along the spatial direction (s).

2. Device according to Claim 1, in which at least some of the emulated individual facets have, relative to a periodic arrangement, an offset in the diffraction plane of the grating, introducing a phase shift of the corresponding individual output pulses (PS).

3. Device according to one of the preceding claims, also comprising a means (80) for splitting the input pulsed laser beam into two input beams that are spatially separate and exhibit orthogonal polarization states, in which said control means (350) is designed to configure said spatial phase modulator (300) so as to emulate two distinct echelle diffraction gratings respectively having said individual facet angles which vary, independently of one another, along said spatial direction(s), each of said gratings being illuminated by one of said two input beams.

4. Device according to Claim 3, also comprising a means (83) for recombining two output beams exhibiting orthogonal polarization states, diffracted by said two echelle diffraction gratings.

5. Device according to one of the preceding claims, in which said spatial phase modulator (300) operates in reflection mode.

6. Device according to Claim 6, in which:

   - said control means (350) is designed to configure said spatial phase modulator (300) so as to emulate a blazed diffraction grafting;
   - the spatial phase modulator (300) is oriented in such a way that said blazed grating is in Littrow configuration; and
   - a beam splitter (4) is provided to extract the beam diffracted (FD) by said modulator, being propagated back toward said input.

7. Device according to one of the preceding claims, in which said telescope comprises a first (1) and a second (2) convergent lens, and in which:

   - said echelle diffraction grating is a blazed grating operating in reflection mode, oriented so as to be in Littrow configuration;
   - a beam splitter (4) is provided to extract the beam diffracted (FD) by said modulator, being propagated back toward said input, after the latter has passed a second time through said second convergent lens (2);
   - a slot (5), oriented perpendicularly to said spatial direction, is arranged on the path of the beam extracted by said splitter, in the focal plane of said second lens, to form said spatial filter.

8. Method for forming laser pulses intended to convert a laser pulse (P1) from an input pulsed laser beam into a train of individual output pulses (PS) exhibiting temporal intensity modulation, comprising the steps consisting in:

   - configuring a spatial phase modulator (300) as defined according to Claim 1;
   - directing a pulsed laser beam (FI) onto said spatial phase modulator (300); and
   - spatially filtering a light beam (FD) diffracted by said spatial phase modulator (300) emulating said echelle diffraction grating (3, 3').

9. Method according to Claim 8, in which at least some of the emulated individual facets exhibit, relative to a periodic arrangement, an offset in the diffraction plane of the grating introducing a phase shift of the corresponding individual output pulses (PS).

10. Method according to one of Claims 8 to 9, also comprising a step consisting in splitting the input pulsed laser beam into two input beams that are spatially separate and that exhibit orthogonal polarization states, and in which, in said configuration step, said spatial phase modulator is configured so as to emulate two distinct echelle diffraction gratings respectively having said individual facet angles which vary, independently of one another, along said spatial direction(s), each of said gratings being illuminated by one of said two input beams.

11. Method according to Claim 10, also comprising a step consisting in recombining two output beams exhibiting orthogonal polarization states, diffracted by said two echelle diffraction gratings.

Fig.1A

Fig.1B

## Fig.2

$P_1$

Entrée

2

$P_2{}^1$

300

$P_2{}^M$

$\alpha_1$

2e

e

350

1

4

5

6

PS

$\frac{2e}{c}$

t

## Fig.3

3'

x

y

z

n

s

## Fig.4

$\Delta\phi$

$L_1$

p

$\delta$

$6\pi$
$4\pi$
$2\pi$
0

$G_1$  $G_2$

$\Delta\phi'$

s

$R_1$

$R_2$

$R_3$

$R_4$

Fig.5

Fig.6A

Fig.6C

Fig.6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5682262 A
- US 6577782 B

**Littérature non-brevet citée dans la description**

- **T. BRIXNER ; G. GERBER.** Femtosecond polarization pulse shaping. *Optics Letters,* 15 Avril 2001, vol. 26 (8), 557-559
- **P. TOURNOIS.** Acousto-optic programmable dispersive filter for adaptive compensation of group delay time dispersion in laser systems. *Opt. Commun.,* 1997, vol. 140, 245-249
- **C. FROEHLY ; B. COLOMBEAU ; M. VAMPOUILLE.** Shaping and analysis of picosecond light pulses. *Progress in Optics XX,* 1983, 112-115
- **EMPLIT P et al.** PASSIVE AMPLITUDE AND PHASE PICOSECOND PULSE SHAPING. *OPTICS LETTERS,* 01 Octobre 1992, vol. 17 (19